# EUROPÄISCHE PATENTANMELDUNG

(11) **EP 3 206 174 A1**
(43) Veröffentlichungstag der Anmeldung: **16.08.2017**
(21) Anmeldenummer: 17152082.8
(22) Anmeldetag: 19.01.2017
(51) Int. Cl.: G06Q 10/06

(54) **VERFAHREN UND ANORDNUNG ZUR INBETRIEBNAHME EINES GEBÄUDEAUTOMATISIERUNGSSYSTEMS**

(30) Priorität: 09.02.2016 DE 102016201883
(71) Anmelder: Siemens Schweiz AG, 8047 Zürich (CH)
(72) Erfinder: Frey, Christian, 6314 Unterägeri (CH)
(74) Vertreter: Maier, Daniel Oliver

(57) **Zusammenfassung**

Verfahren und entsprechende Anordnung zur Inbetriebnahme eines Gebäudeautomatisierungssystems für ein Gebäude, wobei ein im Gebäude verbautes oder zu verbauendes Gerät einen Identifizierungscode mit für das Gerät gerätespezifischen Daten umfasst, wobei der Identifizierungscode durch ein mobiles Kommunikationsendgerät eines Benutzers erfasst wird, wobei auf einem Display des mobilen Kommunikationsendgerätes ein Gebäudeplan für das Gebäude angezeigt wird, wobei durch eine Benutzereingabe am mobilen Kommunikationsendgerät eine Zuordnung des verbautes oder zu verbauenden Gerätes zu einem Ort des Gebäudeplanes und/oder zu anderen verbauten oder zu verbauenden Geräten im Gebäudeplan erfolgt, wobei die Zuordnung im Gebäudeautomatisierungssystem hinterlegt wird.

## Beschreibung

Die Erfindung betrifft ein Verfahren und eine Anordnung zur Inbetriebnahme eines Gebäudeautomatisierungssystems für ein Gebäude. Ferner betrifft die Erfindung ein Computerprogramm und ein computerlesbares Medium, das auf einem Computer ausführbare Befehle aufweist, zur Inbetriebnahme eines Gebäudeautomatisierungssystems für ein Gebäude.

Bei der Inbetriebnahme eines Gebäudeautomatisierungssystems muss die Einbauposition eines Gebäudeautomatisierungsfeldgerätes (z.B. Brandmelder, Thermostat etc.) nach dem Einbau im Gebäude in einem Gebäudeplan dokumentiert werden, damit später u.a. die physikalische Zuordnung zum jeweiligen Einbauort in einer Steuerzentrale oder einem Gebäudemanagementsystem vorgenommen werden kann.

Zusätzlich zur Einbauposition sind auch noch gerätespezifische Daten wie Gerätetyp, Seriennummer, ID und eventuell weitere Attribute des jeweiligen Feldgerätes zu protokollieren. Weiterhin muss bei der Inbetriebnahme des Gebäudeautomatisierungssystems die logische Zuordnung (Verknüpfung) der verbauten Geräte erfolgen. So muss ein Sensor wissen in welchem Raum er verbaut wurde und welchen zugeordneten Aktuator (Stellregler) er ansteuern muss, oder ob er Messdaten von etwaigen benachbarten Sensoren benötigt. So muss z.B. eine Brandmeldezentrale wissen, ob ein Brandmelder in Abhängigkeit mit einem benachbarten Brandmelder steht (Zweimelderabhängigkeit zur Alarmauslösung), welcher im gleichen Raum verbaut ist, oder, ob bei einem Brand ein zugeordneter magnetischer Türhalter abfallen muss, damit die zugeordnete Brandschutztüre schliesst. Solche Zuordnungen erfolgen bislang anhand der vorhandenen Baupläne manuell durch den Inbetriebsetzer. Diese manuellen Zuordnungen sind fehleranfällig. Es können durch Unachtsamkeit Übertragungsfehler entstehen was dazu führen kann, dass z.B. ein Thermostat den Nachbarraum regelt. Ferner ist die Arbeit eines Inbetriebsetzers sehr zeitintensiv, was zudem hohe Lohnkosten verursacht.

Es ist daher die Aufgabe der vorliegenden Erfindung, ein Verfahren und eine Anordnung zur Inbetriebnahme eines Gebäudeautomatisierungssystems für ein Gebäude bereitzustellen, die eine zuverlässige Zuordnung von Feldgeräten in einem Gebäude zu ihrer Repräsentation in einem Gebäudeplan sicherstellen.

Die Aufgabe wird gelöst durch ein Verfahren zur Inbetriebnahme eines Gebäudeautomatisierungssystems für ein Gebäude, wobei ein im Gebäude verbautes oder zu verbauendes Gerät einen Identifizierungscode mit für das Gerät gerätespezifischen Daten umfasst, wobei der Identifizierungscode durch ein mobiles Kommunikationsendgerät (z.B. Smartphone, Tablet-Computer) eines Benutzers erfasst wird, wobei auf einem Display des mobilen Kommunikationsendgerätes ein Gebäudeplan für das Gebäude angezeigt wird, wobei durch eine Benutzereingabe am mobilen Kommunikationsendgerät eine Zuordnung des verbautes oder zu verbauenden Gerätes zu einem Ort des Gebäudeplanes und/oder zu anderen verbauten oder zu verbauenden Geräten im Gebäudeplan erfolgt, wobei die Zuordnung im Gebäudeautomatisierungssystem hinterlegt wird. Das Erfassen des Identifizierungscodes kann durch optisches Einlesen bzw. Scannen des Codes durch ein entsprechend ausgestattetes mobiles Kommunikationsendgerät erfolgen, z.B. durch ein Scan-Programm (Scan-App), das auf dem Kommunikationsendgerät installiert ist. Mit Vorteil ist in dieser Ausführungsform der Identifizierungscode in maschinenlesbarer Form auf dem Gerät angebracht, z.B. als QR-Code, Barcode, oder als Data Matrix Code (DMC) oder NFC-Tag, bzw. RFID-Tag. Das Erfassen des Identifizierungscodes kann aber auch durch manuelle Auswahl eines entsprechenden Gerätes aus einer auf dem Display des Kommunikationsendgerätes anzeigbaren Liste durch den Benutzer (z.B. durch den Inbetriebsetzer) erfolgen. Beide Erfassungsverfahren können natürlich auch nebeneinander verwendet werden, bzw. den Erfassungsverfahren kann hin und der gewechselt werden.

Eine erste vorteilhafte Ausgestaltung der Erfindung liegt darin, dass die Zuordnung durch eine Eintragung in einem digitalen Gebäudemodell (Computermodell) eines, dem Gebäudeautomatisierungssystems zugeordneten Server (BIM-Server) erfolgt. Mit Vorteil ist der Gebäudeplan Teil eines virtuellen oder Gebäudemodells (BIM, Building Information Modeling) für das Gebäude. Das Gebäude bzw. Teilaspekte oder Teilbereiche davon sind in einem Modell in einer entsprechenden Notation datentechnisch hinterlegt und mit Vorteil in einer Datenbank abgespeichert, z.B. im IFC-Format (Industry Foundation Class). Das digitale Gebäudemodell kann mit weiteren Beteiligten (z.B. Facilitymanagement, Haustechnik, Feuerschutzverantwortliche) eines Gebäudemanagements ausgetauscht werden, bzw. weitere Beteiligte haben Zugriff darauf. Ein digitales Gebäudemodell sichert eine konsistente Sicht und eine konsistente Datenhaltung für das entsprechende Gebäude. Mit Vorteil befindet sich die Datenbank mit dem virtuellen bzw. digitalen Gebäudemodell auf einem BIM-Server, welcher in Verbindung mit dem Gebäudemanagementsystems steht.

Eine weitere vorteilhafte Ausgestaltung der Erfindung liegt darin, dass die Eintragung im digitalen Gebäudemodell online erfolgt, durch die Benutzereingabe am mobilen Kommunikationsendgerät. Mit Vorteil wird auf dem mobilen Kommunikationsendgerät ein Gebäudeplan für das Gebäude durch einen Browser bzw. Viewer angezeigt (z.B. durch Browser Plug-in oder App). Der Gebäudeplan befindet sich als Teil des digitalen bzw. virtuellen Gebäudemodells (BIM, Building Information Modeling) auf dem BIM-Server. Dadurch dass die Eintragung im digitalen Gebäudemodell online erfolgt, ist sichergestellt, dass im Gebäudemodell immer ein aktuelles Abbild der momentanen Verbauungssituation im Gebäude hinterlegt ist.

Eine weitere vorteilhafte Ausgestaltung der Erfindung liegt darin, dass die Eintragung im digitalen Gebäudemodell offline erfolgt, durch eine Synchronisation des im mobilen Kommunikationsendgerät hinterlegten Gebäudeplanes mit dem digitalen Gebäudemodell zu bestimmten Zeiten oder Ereignissen. Der Gebäudeplan für das Gebäude kann auf das mobile Kommunikationsendgerät z.B. durch ein Herunterladen (download) vom BIM Server erfolgen. Die Synchronisation des im mobilen Kommunikationsendgerät gespeicherten Gebäudeplans mit dem digitalen bzw. virtuellen Gebäudemodell des BIM-Server kann automatisch zu bestimmten Zeiten (z.B. jede Stunde oder nachts), nach bestimmten Ereignissen (z.B. bei Erreichen einer festgelegten Anzahl von Erfassungen), oder manuell ausgelöst erfolgen. Eine offline Synchronisation der erfassten Daten mit dem Gebäudemodell auf dem BIM-Server ist besonders bei der Übertragung von grossen bzw. komplexen Datenmengen sinnvoll.

Eine weitere vorteilhafte Ausgestaltung der Erfindung liegt darin, dass das Erfassen des Identifizierungscode durch Einlesen des Identifizierungscode am mobilen Kommunikationsendgerät erfolgt. Mit Vorteil ist in dieser Ausführungsform der Identifizierungscode in maschinenlesbarer Form auf dem Gerät angebracht, z.B. als NFC-Tag bzw. RFID-Tag, QR-Code, Barcode, oder als Data Matrix Code (DMC). Das Erfassen des Identifizierungscodes kann durch optisches Einlesen bzw. Scannen des Codes durch ein entsprechend ausgestattetes mobiles Kommunikationsendgerät erfolgen, z.B. durch ein Scan-Programm (Scan-App), das auf dem Kommunikationsendgerät installiert ist. Beim mobilen Kommunikationsendgerät handelt es sich mit Vorteil um ein markübliches kommerzielles Gerät, das von der Stange bezogen werden kann (Commercial off-the-shelf).

Eine weitere vorteilhafte Ausgestaltung der Erfindung liegt darin, dass ein verbautes oder zu verbauendes Gerät in einer lokalen oder Online-Datenbank (Produktkatalog) erfasst und auf dem Display des Kommunikationsendgerätes anzeigbar ist und die Zuordnung des verbautes oder zu verbauenden Gerätes zu einem Ort des Gebäudeplanes und/oder zu anderen verbauten oder zu verbauenden Geräten im Gebäudeplan durch eine manuelle Auswahl des Bedieners erfolgt. Mit Vorteil erfolgt die manuelle Auswahl durch eine Selektion aus entsprechenden Listen, z.B. durch Auswahl in einem Dropdown-Menü (z.B. Dropdown-Liste, Dropdown-Listenfeld) oder einem Pulldown-Menü. Die Auswahl erfolgt durch Selektion (z.B. Antippen) und visueller Verifikation.

Eine weitere vorteilhafte Ausgestaltung der Erfindung liegt darin, dass auf dem im mobilen Kommunikationsendgerät hinterlegten Gebäudeplan der Ort für ein geeignetes zu verbauendes Gerät angezeigt wird. Mit Vorteil wird das nächstgelegene Gerät, das bereit zum Verbauen ist, auf dem Kommunikationsendgerät ausgegeben bzw. angezeigt. Dies kann visuell durch eine Wegbeschreibung auf dem Display des Kommunikationsendgerätes erfolgen und/oder akustisch durch Ansage der Wegbeschreibung. Durch die Angabe des optimalen Weges durch das Gebäude wird insbesondere für einen ortsunkundigen Inbetriebsetzer die für eine Inbetriebnahme benötigte Zeit reduziert. Weiterhin können auch Einbau- bzw. Installationshilfen angezeigt werden, oder auch welche Werkzeuge zu benutzen sind.

Eine weitere vorteilhafte Ausgestaltung der Erfindung liegt darin, dass die aktuelle Position des Benutzers auf dem am mobilen Kommunikationsendgerät angezeigten Gebäudeplan, basierend auf im mobilen Kommunikationsendgerät empfangenen Positionsinformation eines Indoor-Positionierungssystems, kalibriert wird. Wenn sich das mobile Kommunikationsendgerät in einem Funkabstrahlbereich einer Sendevorrichtung eines Indoor-Positionierungssystems befindet, erfolgt die Kalibrierung bzw. Re-kalibrierung der mobilen Objekte basierend auf der im jeweiligen Funkabstrahlbereich durch das mobile Kommunikationsendgerät jeweils empfangenen Positionsinformation. Die Sendevorrichtung mit ihrer jeweils eindeutigen zugeordneten Positionsinformation wirkt für die Kalibrierung bzw. Rekalibrierung wie ein Referenz-Beacon. Bei der Sendevorrichtung kann es sich z.B. um WLAN-, Bluetooth, oder Zigbee-Sender bzw. um eine Kombination von Sendern (Beacons) handeln.

Eine weitere vorteilhafte Ausgestaltung der Erfindung liegt darin, dass die Benutzereingabe am mobilen Kommunikationsendgerät für die Zuordnung akustisch und/oder taktil *(z.B. durch* schriftliche Eingabe, durch Selektion aus einer Liste, oder durch "Ziehen und Ablegen" von entsprechenden Symbolen (drag & drop) und/oder durch eine Gestik erfolgt. Das mobile Kommunikationsendgerät ist dabei mit den adäquaten Eingabemittel (z.B. Touchscreen) ausgestattet.

Die Aufgabe wird auch gelöst durch ein Computerprogramm zur Inbetriebnahme eines Gebäudeautomatisierungssystems mit Instruktionen zur Ausführung des erfindungsgemässen Verfahrens. Das Computerprogramm kann in den Speicher des mobilen Kommunikationsendgerätes geladen werden, durch eine drahtgebundene oder eine drahtlose Datenübertragung. Mit Vorteil erfolgt eine drahtlose Datenübertragung durch einen "Download" des Programms vom Internet oder von einer Leitstelle, z.B. einer Gebäudeleitstelle bzw. von einem Gebäudemanagementsystem mit dem das mobile Kommunikationsendgerät datentechnisch verbunden ist.

Die Aufgabe wird weiterhin gelöst durch ein computerlesbares Medium (z.B. SD-Karte, CD, USB-Speicherstick), das auf einem Computer ausführbare Befehle aufweist zur Durchführung des erfindungsgemässen Verfahrens.

Die Aufgabe wird weiterhin gelöst durch eine Anordnung zur Inbetriebnahme eines Gebäudeautomatisierungssystems für ein Gebäude, wobei im Gebäude verbaute oder zu verbauende Geräte einen maschinell lesbaren Identifizierungscode (z.B. NFC-Tag, RFID-Tag, QR-Code, Barcode, Data Matrix Code) mit für das jeweilige Gerät (z.B. Brandmelder, Temperatursensor, Thermostat, etc.) gerätespezifischen Daten (u.a. IFC/BIM-Daten) aufweisen, die Anordnung umfassend:
- ein mobiles Kommunikationsendgerät (z.B. Smartphone, Tablet-Computer) geeignet zum Erfassen des Identifizierungscodes des zu installierenden Geräts oder zur Selektion des zu installierenden Geräts am Kommunikationsendgerät durch einen Benutzer, wobei im mobilen Kommunikationsendgerät ein Gebäudeplan eines digitalen/virtuellen Gebäudemodells für das Gebäude geladen ist, der auf dem Display des Kommunikationsendgerätes anzeigbar ist;
- einen Server für das Gebäudeautomatisierungssystem, der mit dem mobilen Kommunikationsendgerät über eine drahtlose Kommunikationsverbindung verbunden ist und das digitale Gebäudemodell für das Gebäude umfasst; wobei durch eine Benutzereingabe am mobilen Kommunikationsendgerät eine Zuordnung eines verbauten oder zu verbauenden Gerätes, dessen Identifizierungscode eingelesen wurde, zu einem Ort (3D-Ortsposition) des Gebäudeplanes und/oder zu anderen verbauten oder zu verbauenden Geräten im Gebäudeplan erfolgt, wobei die Zuordnung im Server des Gebäudeautomatisierungssystem hinterlegt wird und durch einen entsprechenden Eintrag im digitalen Gebäudemodell erfolgt. Der Eintrag im digitalen/virtuellen Gebäudemodell kann online durch eine entsprechende Kommunikationsverbindung zwischen dem mobilen Kommunikationsendgerät und dem Server (BIM-Server) des Gebäudeautomatisierungssystems erfolgen oder offline automatisch zu bestimmten Synchronisationszeiten bzw. nach Aktivierung durch den Benutzer. Das Erfassen des Identifizierungscodes für ein zu installierendes Gerät kann durch Selektion aus einer Liste am Kommunikationsendgerät erfolgt und/oder durch Einlesen des maschinenlesbaren Identifizierungscodes, der auf dem zu verbauenden Gerät angebracht ist, durch eine Leseeinheit (z.B. Kamera oder Tag-Reader)des mobilen Kommunikationsendgerätes mit entsprechender Scan- und Verarbeitungs-Software.

Die Erfindung sowie vorteilhafte Ausführungen der vorliegenden Erfindung werden am Beispiel der nachfolgenden Figuren erläutert. Dabei zeigen:
- FIG 1: ein beispielhaftes Szenario für die Verwendung des erfindungsgemässen Verfahrens,
- FIG 2: ein beispielhaftes mobiles Kommunikationsendgerät, geeignet für die Verwendung des erfindungsgemässen Verfahrens, und
- FIG 3: ein beispielhaftes Ablaufdiagramm für ein Verfahren zur Inbetriebnahme eines Gebäudeautomatisierungssystems für ein Gebäude.

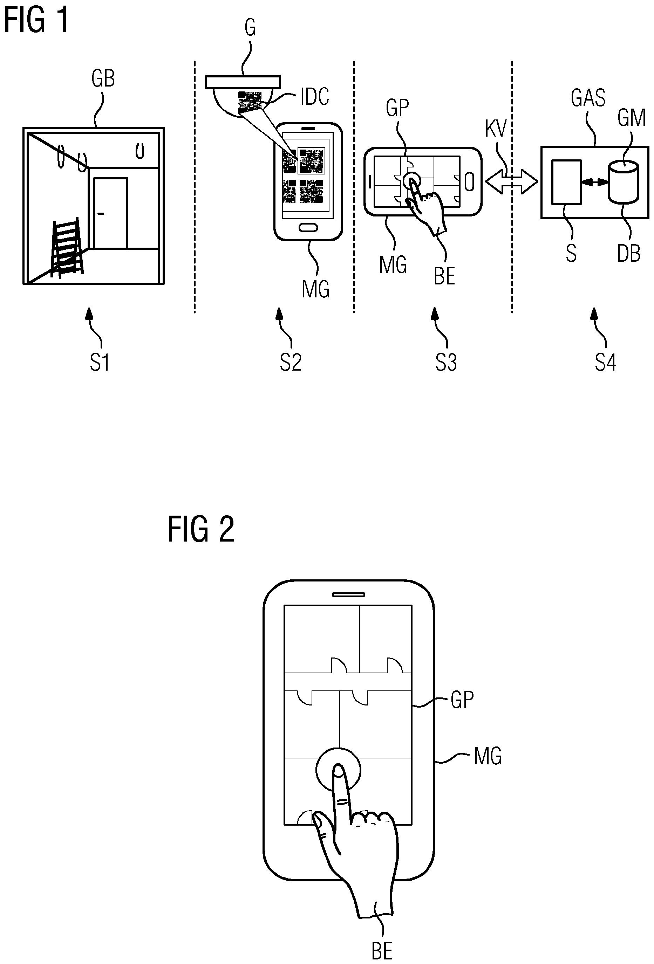

Figur 1 zeigt ein beispielhaftes Szenario für die Verwendung des erfindungsgemässen Verfahrens zur Inbetriebnahme eines Gebäudeautomatisierungssystems GAS für ein Gebäude GB.

Szenarioschritt S1 zeigt einen beispielhaften Raum eines Gebäudes GB bei dem an der Decke Geräte (z.B. Brandmelder, Aktoren, Sensoren, Beleuchtungsgeräte) installiert werden bzw. wurden.

Szenarioschritt S2 zeigt als beispielhaftes zu verbauendes bzw. verbautes Gerät G einen Brandmelder, der mit einem maschinenlesbaren Identifizierungscode IDC versehen ist. Mit Vorteil ist der Identifizierungscode IDC sichtbar an der Aussenseite des Gerätes angebracht. So kann der Identifizierungscode IDC ohne erforderliche Montagetätigkeiten direkt durch ein Kommunikationsendgerät MG (z.B. Smartphone, Tablet-Computer) eingelesen werden. Das Kommunikationsendgerät MG ist dabei mit einer entsprechenden Software (z.B. Scan-App) und entsprechender Einlese-Hardware (z.B. Kamera) versehen. Als Identifizierungscode IDC können z.B. NFC-Tags, RFID-Tags, QR-Codes, Data Matrix Codes (DMC) oder Barcodes verwendet werden. Prinzipiell wäre es auch möglich den Identifizierungscode IDC innerhalb des Gehäuses des Gerätes G anzubringen, z.B. auf der Gehäuseinnenseite, aber dann müsste vor dem Einlesen des Identifizierungscodes IDC erst demontiert und dann wieder montiert werden (Dies ist bei Funk-Tags (z.B. NFC, RFID) nicht unbedingt nötig). Der Identifizierungscode IDC stellt eine eindeutige Kennzeichnung des jeweiligen Gerätes (Feldgerätes) sicher. Neben der eindeutigen Kennzeichnung enthält der Identifizierungscode IDC vorteilhafter weise optional weitere Informationen zum verbauten Gerät, wie z.B. Seriennummer, Gerätetyp, Wartungsintervalle, Hersteller, Lieferant.

Szenarioschritt S3 zeigt, wie das Gerät G, dessen Identifizierungscode IDC im Szenarioschritt S2 eingelesen wurde, einem Ort des Gebäudeplanes GP und/oder zu anderen verbauten oder zu verbauenden Geräten G im Gebäudeplan GP zugeordnet wird. Eine Möglichkeit der Zuordnung besteht darin, dass auf dem Display des mobilen Kommunikationsendgerätes MG der Gebäudeplan GP für das Gebäude GB angezeigt wird, und dass durch eine Benutzereingabe BE am mobilen Kommunikationsendgerät MG die Zuordnung des Gerätes G, dessen Identifizierungscode IDC im Szenarioschritt S2 eingelesen wurde, zu einem Ort des Gebäudeplanes und/oder zu anderen verbauten oder zu verbauenden Geräten im Gebäudeplan GP erfolgt. Bei der Benutzereingabe BE kann es sich z.B. um eine manuelle Selektion eines Raumes oder eines anderen Gerätes im Gebäudeplan handeln. Die Benutzereingabe BE erfolgt mit Vorteil durch ein "Antippen" an der entsprechenden Stelle im Gebäudeplan GP, der auf einem berührungssensitiven Display (Touch-Oberfläche) des Kommunikationsendgerätes MG dargestellt ist. Mit Vorteil wird unmittelbar nach dem Einlesen (z.B. nach dem Einscannen) des Identifizierungscodes IDC der Gebäudeplan GP auf dem Kommunikationsendgerät MG, in einem Zustand bereit für eine Zuordnung, angezeigt. Mit Vorteil wird nach dem erfolgten Einlesen (z.B. nach dem Einscannen) des Identifizierungscodes IDC der Gebäudeplan GP auf dem Kommunikationsendgerät MG, in einem Zustand bereit für eine Zuordnung nach einer Drehung des Kommunikationsendgerätes MG um mindestens 90 Grad, angezeigt.

Szenarioschritt S4 zeigt die Hinterlegung der Zuordnung im Gebäudeautomatisierungssystem GAS. Dabei wird mit Vorteil über eine drahtlose Kommunikationsverbindung KV (z.B. Internet, WLAN, Funkverbindung, Satellitenverbindung) in einem Speicher DB des Servers S des Gebäudeautomatisierungssystems GAS hinterlegt. Beim Speicher DB kann es sich z.B. um einen Flash-Speicher oder um eine In-Memory-Datenbank (IMDB) handeln. Beim Server S handelt es sich um einen entsprechend ausgestatteten Computer (z.B. workstation, PC, Laptop) mit entsprechenden Kommunikationsmechanismen bzw. Schnittstellen, um insbesondere eine Kommunikationsverbindung KV zum mobilen Kommunikationsendgerät MG eines Benutzers (z.B. Installateur, Inbetriebsetzer) herzustellen.

Ein Gebäudeautomatisierungs- bzw. Gebäudemanagementsystem GAS steuert und überwacht administrative und operative Funktionen für ein Gebäude, wie z.B. hinsichtlich Assetmanagement, Facilitymanagement, aber auch hinsichtlich Zugangskontrolle. Insbesondere wird durch das Gebäudeautomatisierungssystem GAS auch der Betriebszustand von im Gebäude vorhandener Infrastruktur (z.B. Heizungsanlagen, Lüftungsanlagen, Klimaanlagen, Sensoren, Aktoren, Aktuatoren) überwacht und bei Bedarf entsprechende Service- bzw. Wartungsarbeiten initiiert. So ist es für ein Gebäudeautomatisierungssystem GAS insbesondere wichtig, dass es Zugang zu Informationen hinsichtlich im Gebäude verbauter Feldgeräte (z.B. Brandmelder) hat. So muss für das Gebäudeautomatisierungssystem GAS bekannt sein, welche Typen von Feldgeräten verbaut wurden und wo sich diese im Gebäude befinden bzw. mit welchen weiteren Feldgeräten ein bestimmtes Feldgerät zusammenarbeitet (z.B. wenn eine Aktor-Sensor-Beziehung besteht). Diese Ortszuordnungen oder Zusammenarbeitszuordnungen erfolgen üblicherweise im Rahmen der Inbetriebnahme vorgenommen und für eine elektronische Auswertung oder Weiterverarbeitung im Rahmen einer Gebäudedatenmodellierung in einem entsprechenden Gebäudeinformationsmodell (BIM, Building Information Modeling) hinterlegt. Dadurch sind alle aktuellen und relevanten Gebäudedaten für alle bei der Herstellung bzw. beim Betreiben eines Gebäudes Beteiligten unmittelbar und konsistent verfügbar. Mit Vorteil ist das Gebäudeinformationsmodell, d.h. das digitale/virtuelle Gebäudemodell in einer Datenmodellierungstechnik und in einer entsprechenden Notation (z.B. Object-Modeling-Technique, OMT) oder IFC (Industry Foundation Classes) hinterlegt, wobei Beziehungen und Relationen zwischen Objekten (z.B. Feldgeräte) im Gebäude dargestellt werden.

Für die Inbetriebnahme des Gebäudeautomatisierungssystems erfolgt die Zuordnung eines Feldgerätes zu einem Ort im Gebäudeplan GP durch eine entsprechende Eintragung im digitalen/virtuellen Gebäudemodell (Gebäudeinformationsmodell) des, dem Gebäudeautomatisierungssystems zugeordneten, BIM-Server S.

Die Eintragung im digitalen Gebäudemodell kann online durch eine Benutzereingabe in einen Browser des mobilen Kommunikationsendgerätes MG (z.B. Smartphone, Tablet-Computer) erfolgen, oder offline, durch eine Synchronisation des im mobilen Kommunikationsendgerät hinterlegten Gebäudeplanes mit dem digitalen/virtuellen Gebäudemodell zu bestimmten Zeiten (z.B. nach Dienstschluss, oder jede Stunde) oder nach bestimmten Ereignissen (z.B. nach einer bestimmten Anzahl von Einscan-Vorgängen.

Mit Vorteil ist das mobile Kommunikationsendgerät MG mit entsprechender Hardware (Kamera, Einlesesensorik) und Software (Scan-App) für das Erfassen des Identifizierungscodes IDC ausgestattet. Mit Vorteil macht der Inbetriebsetzer mit dem mobilen Kommunikationsendgerät MG auch ein Foto des Gerätes G nach erfolgter Inbetriebnahme und sendet dieses zusammen mit dem Identifizierungscode IDC an den BIM-Server. Im digitalen/virtuellen Gebäudemodell (BIM Model) GM wird dieses Foto als Metainformation zum entsprechenden Geräteobjekt hinterlegt.

Mit Vorteil wird bei einer Raumplanungsänderung die logische Verknüpfung der verbauten Gebäudeautomatisierungsfeldgeräte überprüft und eventuell eine neue logische Zuordnung vorgenommen. Mit Vorteil wird bei einer Raumplanungsänderung der Inbetriebsetzer auf seinem mobilen Kommunikationsendgerät MG durch das Gebäudeautomatisierungssystems GAS automatisch via der bidirektionalen Kommunikationsverbindung KV informiert.

BIM Server S sind am Bau bereits vermehrt in der Designphase im Einsatz und beinhalten einen "digitalen Zwilling" des Gebäudes, d.h. ein Objektmodel GM als digitales Abbild des Gebäudes GB. Z.B. mithilfe von Smartphone oder Tablets und einer Augmented-Reality-Software kann das Gebäude-Modell GM virtuell betreten und entdeckt werden wo die einzelnen Gewerke im Gebäude GB verbaut und wie diese miteinander verknüpft sind. So werden mit Vorteil bereits in der Planungsphase die Einbauorte der Feldgeräte G bestimmt und in das digitale Gebäude-Modell GM eingetragen. Die Ausführung der Bauarbeiten ist bereits vorgeplant und Funktionalitäten ggf. simuliert, um mögliche Konflikte zu reduziert. Die Planung und Inbetriebnahme der Gebäude-Gewerke wird sich dadurch verbessert.

Die Data-Matrix-Code-Aufkleber IDC der Geräte G werden neu nicht mehr erst in einen 2D Plan geklebt und nach der Installation aus diesem Plan (Papier) gescannt. Stattdessen werden mit Vorteil mit dem Lesegerät MG (Tablet oder SmartPhone) gleich vor Ort nach dem Einbau die Daten und die Position des Gebäudeautomatisierungsfeldgerätes G direkt an einen BIM-Server S übertragen, bei welchem in einem entsprechenden Speicher GM (z.B. Flash-Speicher) das digitale Gebäudemodell GM hinterlegt ist.

Alternativ kann der Gebäudeplan GP (als Teil des Gebäudemodells GM) zuvor auf das Kommunikationsendgerät MG geladen werden und steht damit offline auf der Baustelle zur Verfügung (z.B. für den Inbetriebsetzer). Die Synchronisation mit dem BIM Server S erfolgt dann, wenn das Kommunikationsendgerät MG wieder online ist. Dazu wird zunächst der DMC des einzubauenden Gerätes G (z.B. Brandmelder) gescannt und dieser danach "eingebaut". Mit Vorteil erscheint durch anschliessendes Drehen des Kommunikationsendgerätes MG (z.B. Smartphone, Tablet-Computer) der digitale Gebäudeplan (2D oder 3D) GP auf dem Display des Kommunikationsendgerätes MG. Anschliessend wird im digitalen Gebäudeplan GP das bereits eingearbeitet digitale Objekt am vorbestimmten Ort angeklickt.

Der DMC (als Identifizierungscode IDC) und die "digitale Position" im Plan GP sind somit verknüpft. Zusätzlich kann eine laufende Nummer ergänzt werden, zur Dokumentation noch ein Foto der ordnungsgemässen Installation aufgenommen oder weitere Kommentare hinzugefügt und ebenfalls verknüpft werden.
Ein weiterer Vorteil besteht darin, dass das System den Installationsort des nächsten einzuschraubenden Brandmelder bereits vorschlägt und die "virtuelle bzw. digitale Position" am Lesegerät anzeigt. Damit wird dem Inbetriebsetzungstechniker eine optimale Inbetriebsetzungsroute durch das Systems vorgeschlagen.

Ist während der Installation ein "Indoor Positioning System" (IPS) bereits vorhanden (z.B. I-Beacons, WiFi Access Points), kann die "digitale Position" mit der realen verifiziert werden. Alternativ können Referenzpositionen im Gebäude mit dem digitalen Plan "gemappt" und als Startpunkt für eine Indoor Navigation genommen werden. Mit Hilfe der in einem SmartPhone vorhandenen Sensorik (Gyrometer, Kompass, Beschleunigungssensor, Barometer, etc.) kann so auch die ungefähre Position des Installationsorts bestimmt werden.

Insbesondere nach dem Verschieben oder dem Einziehen von Zwischenwänden kann die Position und auch die Verknüpfung des Brandmelders G überprüft werden. Das System kann dazu zur Unterstützung auch Konflikte grafisch hervorheben.

Ein weiterer Aspekt der vorliegenden Erfindung ist eine Anordnung zur Inbetriebnahme eines Gebäudeautomatisierungssystems für ein Gebäude GB, wobei im Gebäude GB verbaute oder zu verbauende Geräte G einen maschinell lesbaren Identifizierungscode IDC mit für das jeweilige Gerät G gerätespezifischen Daten aufweisen, die Anordnung umfasst:
- ein mobiles Kommunikationsendgerät MG geeignet zum Erfassen des Identifizierungscodes IDC des zu installierenden Geräts G oder zur Selektion des zu installierenden Geräts G am Kommunikationsendgerät MG durch einen Benutzer (z.B. Inbetriebsetzer), wobei im mobilen Kommunikationsendgerät MG ein Gebäudeplan GP eines digitalen Gebäudemodells GM für das Gebäude GB geladen ist, der auf dem Display des Kommunikationsendgerätes MG anzeigbar ist;
- einen Server S (z.B. Workstation, PC mit entsprechender Hardware und Software) für das Gebäudeautomatisierungssystem GAS, der mit dem mobilen Kommunikationsendgerät MG über eine drahtlose Kommunikationsverbindung KV (z.B. Funkverbindung) verbunden ist und das digitale Gebäudemodell GM für das Gebäude GB umfasst, wobei durch eine Benutzereingabe BE (z.B. Antippen auf dem Touch-Display) am mobilen Kommunikationsendgerät MG eine Zuordnung eines verbauten oder zu verbauenden Gerätes G, dessen Identifizierungscode IDC eingelesen wurde, zu einem Ort des Gebäudeplanes GP und/oder zu anderen verbauten oder zu verbauenden Geräten G im Gebäudeplan GP erfolgt, wobei die Zuordnung im Server S des Gebäudeautomatisierungssystem GAS hinterlegt wird und durch einen entsprechenden Eintrag im digitalen Gebäudemodell GM erfolgt.

In einem Speicher DB (z.B. In-Memory-Datenbank oder Flash-Speicher) des Server S ist das digitale Gebäudemodell GM in einem entsprechenden Format (z.B. IFC oder einem aus der Informatik bekannten Objektmodell (z.B. OMT, UML) hinterlegt.

Figur 2 zeigt ein beispielhaftes mobiles Kommunikationsendgerät MG, geeignet für die Verwendung des erfindungsgemässen Verfahrens. Das mobile Kommunikationsendgerät MG (z.B. Smartphone, Tablet-Computer) steht über eine bidirektionale Kommunikationsverbindung mit dem Server eines Gebäudeautomatisierungssystems in Verbindung, um online, d.h. in Realtime oder zu bestimmten Zeiten bzw. nach definierten Ereignissen, im Batch-Betrieb Daten zu transferieren. Mit entsprechender Sensorik (z.B. Kamera oder Leseoptik) des mobilen Kommunikationsendgerätes MG kann ein Benutzer (z.B. Installateur, Inbetriebsetzer) den Identifizierungscode eines in einem Gebäude zu verbauenden Gerätes G erfassen und über eine Benutzereingabe BE (z.B. manuelle Selektion oder Antippen auf einem berührungssensitiven Display) einer Stelle im Gebäudeplan GP zuordnen. Der Gebäudeplan GP wird dabei auf dem Display des Kommunikationsendgerätes MG dargestellt. Diese Zuordnung wird über die Kommunikationsverbindung dem Server (BIM-Server) übermittelt, wo sie im Gebäudemodell (BIM Model) entsprechend hinterlegt wird. Beim mobilen Kommunikationsendgerät MG handelt es sich mit Vorteil um ein handelsübliches Gerät (z.B. Smartphone).

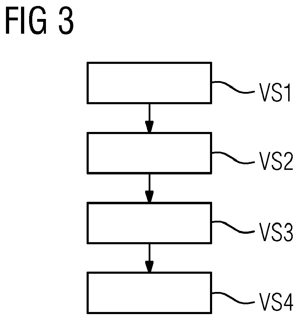

Figur 3 zeigt ein beispielhaftes Ablaufdiagramm für ein Verfahren zur Inbetriebnahme eines Gebäudeautomatisierungssystems für ein Gebäude, wobei ein im Gebäude verbautes oder zu verbauendes Gerät einen Identifizierungscode (z.B. Data Matrix Code, Barcode, QR-Code oder NFC-Tag, bzw. RFID-Tag) mit für das Gerät gerätespezifischen Daten umfasst,
(VS1) wobei der Identifizierungscode durch ein mobiles Kommunikationsendgerät (z.B. Smartphone, Tablet-Computer) eines Benutzers erfasst wird,
(VS2) wobei auf einem Display (mit Vorteil Touch-Display) des mobilen Kommunikationsendgerätes ein Gebäudeplan für das Gebäude angezeigt wird,
(VS3) wobei durch eine Benutzereingabe am mobilen Kommunikationsendgerät eine Zuordnung des verbauten oder zu verbauenden Gerätes zu einem Ort des Gebäudeplanes und/oder zu anderen verbauten oder zu verbauenden Geräten im Gebäudeplan erfolgt,
(VS4) wobei die Zuordnung im Gebäudeautomatisierungssystem hinterlegt wird.

Mit Vorteil erfolgt die Zuordnung durch eine Eintragung in einem digitalen Gebäudemodell (z.B. IFC Model oder Objektmodell) eines, dem Gebäudeautomatisierungssystems zugeordneten Server.

Mit Vorteil erfolgt die Eintragung im digitalen Gebäudemodell online durch eine Benutzereingabe in einem Browser auf dem mobilen Kommunikationsendgerät.

Die Eintragung im digitalen Gebäudemodell kann auch offline bzw. im Batch-Betrieb erfolgen, z.B. durch eine Synchronisation des im mobilen Kommunikationsendgerät hinterlegten Gebäudeplanes mit dem digitalen Gebäudemodell zu bestimmten Zeiten oder Ereignissen.

Mit Vorteil erfolgt das Erfassen des Identifizierungscode durch Einlesen des Identifizierungscode am mobilen Kommunikationsendgerät durch eine entsprechende Einlese-Software (z.B. Scan-App oder Barcode-Leser oder NFC-Leser, bzw. RFID-Leser).

Das Verfahren kann computergestützt mit handelsüblicher Hardware (z.B. handelsübliche Server mit geeigneter Datenbank für das digitale Gebäudemodell) und Software (z.B. Scan-App auf Kommunikationsendgerät, bzw. Browser Plug-in) realisiert werden.

Die vorliegende Erfindung bietet insbesondere folgende Vorteile:
- Diese Erfindung digitalisiert den Inbetriebsetzungsprozess weiter und umgeht den Schritt des "umständlichen" Einklebens der DMC-Kleber in einen 2D Papierplan, sowie die anschliessende Übertagung in ein Planungstool (wie z.B. Sinteso Works) bzw. in eine Datenbank.
- Inbetriebsetzer und Service-Techniker können ihre Arbeit effektiver (z.B. Anzeige nächster Installationsort) und sicherer ausführen und werden bei der Nachweisführung der erledigten Teil-Aufgaben unterstützt. Erst wenn alle im BIM geplanten Feldgeräte (Brandmelder) abgearbeitet sind, wird die Aufgabe als "erledigt" gekennzeichnet. Diese Information steht dann allen Beteiligten (Bauherr, Architekt, Bauleiter, ...) über den BIM-Server zur Verfügung, erhöht die Transparenz und erleichtert damit die Projektsteuerung und -verfolgung enorm.
- Die eindeutige Kennzeichnung der Feldgeräte (DMC oder andere maschinenlesbare Codes), die App auf dem SmartPhone (Lesegerät) und dessen Verbindung zum BIM Server, bzw. das Laden von entsprechenden Gebäudeplänen ermöglichen eine einfache Realisierung dieses technischen Verfahren.
- Es liegt eine wesentlich bessere Dokumentation der verbauten Geräte vor.
- Die Inbetriebsetzungszeit wird erheblich verkürzt, was eine hohe Kosteneinsparung mit sich bringt.
- Die Qualität der Inbetriebsetzung wird durch Transparenz und Nachverfolgbarkeit erheblich erhöht.
- Insbesondere Veränderungen währen der Planungs- und Nutzungsphase des Gebäudes sind leicht zu dokumentieren.
- Es müssen keine (aktuellen) Papierpläne gefunden und geändert werden.
- Der Projektfortschritt steht für alle Beteiligte quasi in Echtzeit zur Verfügung.

Verfahren und entsprechende Anordnung zur Inbetriebnahme eines Gebäudeautomatisierungssystems für ein Gebäude, wobei ein im Gebäude verbautes oder zu verbauendes Gerät einen Identifizierungscode mit für das Gerät gerätespezifischen Daten umfasst, wobei der Identifizierungscode durch ein mobiles Kommunikationsendgerät eines Benutzers erfasst wird, wobei auf einem Display des mobilen Kommunikationsendgerätes ein Gebäudeplan für das Gebäude angezeigt wird, wobei durch eine Benutzereingabe am mobilen Kommunikationsendgerät eine Zuordnung des verbautes oder zu verbauenden Gerätes zu einem Ort des Gebäudeplanes und/oder zu anderen verbauten oder zu verbauenden Geräten im Gebäudeplan erfolgt, wobei die Zuordnung im Gebäudeautomatisierungssystem hinterlegt wird.

### Bezugszeichen

- GB: Gebäude
- GAS: Gebäudeautomatisierungssystem
- GP: Gebäudeplan
- GM: Gebäudemodell
- MG: Kommunikationsendgerät
- KV: Kommunikationsverbindung
- G: Gerät
- IDC: Identifizierungscode
- DMC: Digital Matrix Code
- BE: Benutzereingabe
- S1 - S4: Szenarioschritt
- VS1 - VS4: Verfahrensschritt

## Patentansprüche

1. Verfahren zur Inbetriebnahme eines Gebäudeautomatisierungssystems (GAS) für ein Gebäude (GB),
wobei ein im Gebäude (GB) verbautes oder zu verbauendes Gerät (G) einen Identifizierungscode (IDC) mit für das Gerät (G) gerätespezifischen Daten umfasst,
(VS1) wobei der Identifizierungscode (IDC) durch ein mobiles Kommunikationsendgerät (MG) eines Benutzers erfasst wird,
(VS2) wobei auf einem Display des mobilen Kommunikationsendgerätes (MG) ein Gebäudeplan (GP) für das Gebäude (GB) angezeigt wird,
**dadurch gekennzeichnet, dass**
(VS3) durch eine Benutzereingabe (BE) am mobilen Kommunikationsendgerät (MG) eine Zuordnung des verbauten oder zu verbauenden Gerätes (G) zu einem Ort des Gebäudeplanes (GP) und/oder zu anderen verbauten oder zu verbauenden Geräten (G) im Gebäudeplan (GP) erfolgt,
(VS4) wobei die Zuordnung im Gebäudeautomatisierungssystem (GAS) hinterlegt wird.

2. Verfahren nach Anspruch 1, wobei die Zuordnung durch eine Eintragung in einem digitalen Gebäudemodell (GM) eines, dem Gebäudeautomatisierungssystems (GAS) zugeordneten Server (S) erfolgt.

3. Verfahren nach Anspruch 1 oder 2, wobei die Eintragung im digitalen Gebäudemodell (GM) online erfolgt, durch die Benutzereingabe (BE) am mobilen Kommunikationsendgerät (MG).

4. Verfahren nach Anspruch 1 oder 2, wobei die Eintragung im digitalen Gebäudemodell (GM) offline erfolgt, durch eine Synchronisation des im mobilen Kommunikationsendgerät (MG) hinterlegten Gebäudeplanes (GP) mit dem digitalen Gebäudemodell (GM) zu bestimmten Zeiten oder Ereignissen.

5. Verfahren nach einem der vorstehenden Ansprüche, wobei das Erfassen des Identifizierungscode (IDC) durch Einlesen des Identifizierungscode (IDC) am mobilen Kommunikationsendgerät (MG) erfolgt.

6. Verfahren nach einem der vorstehenden Ansprüche, wobei ein verbautes oder zu verbauendes Gerät in einer lokalen oder Online-Datenbank (Produktkatalog) erfasst und auf dem Display des Kommunikationsendgerätes (MG) anzeigbar ist und die Zuordnung des verbauten oder zu verbauenden Gerätes (G) zu einem Ort des Gebäudeplanes (GP) und/oder zu anderen verbauten oder zu verbauenden Geräten (G) im Gebäudeplan (GP) durch eine manuelle Auswahl des Bedieners erfolgt.

7. Verfahren nach einem der vorstehenden Ansprüche, wobei auf dem im mobilen Kommunikationsendgerät (MG) hinterlegten Gebäudeplan (GP) der Ort für ein geeignetes zu verbauendes Gerät (G) angezeigt wird.

8. Verfahren nach einem der vorstehenden Ansprüche, wobei die aktuelle Position des Benutzers auf dem am mobilen Kommunikationsendgerät (MG) angezeigten Gebäudeplan (GP), basierend auf im mobilen Kommunikationsendgerät (MG) empfangenen Positionsinformation eines Indoor-Positionierungssystems, kalibriert wird.

9. Verfahren nach einem der vorstehenden Ansprüche, wobei die Benutzereingabe (BE) am mobilen Kommunikationsendgerät (MG) für die Zuordnung akustisch und/oder taktil und/oder durch eine Gestik erfolgt.

10. Computerprogramm zur Inbetriebnahme eines Gebäudeautomatisierungssystems mit Instruktionen zur Ausführung des Verfahrens nach einem der Patentansprüche 1 bis 9.

11. Computerlesbares Medium, das auf einem Computer oder Prozessor ausführbare Befehle aufweist zur Inbetriebnahme eines Gebäudeautomatisierungssystems (GAS) gemäss eines Verfahren nach einem der Patentansprüche 1 bis 9.

12. Anordnung zur Inbetriebnahme eines Gebäudeautomatisierungssystems (GAS) für ein Gebäude (GB), wobei im Gebäude (GB) verbaute oder zu verbauende Geräte (G) einen maschinell lesbaren Identifizierungscode (IDC) mit für das jeweilige Gerät (G) gerätespezifischen Daten aufweisen, die Anordnung umfassend:
ein mobiles Kommunikationsendgerät (MG) geeignet zum Erfassen des Identifizierungscodes (IDC) des zu installierenden Geräts (G) oder zur Selektion des zu installierenden Geräts (G) am Kommunikationsendgerät (MG) durch einen Benutzer, wobei im mobilen Kommunikationsendgerät (MG) ein Gebäudeplan (GP) eines digitalen Gebäudemodells (GM) für das Gebäude geladen ist, der auf dem Display des Kommunikationsendgerätes (MG) anzeigbar ist;
einen Server (S) für das Gebäudeautomatisierungssystem (GAS),der mit dem mobilen Kommunikationsendgerät (MG) über eine drahtlose Kommunikationsverbindung (KV) verbunden ist und das digitale Gebäudemodell (GM) für das Gebäude (GB) umfasst; **dadurch gekennzeichnet, dass**
durch eine Benutzereingabe (BE) am mobilen Kommunikationsendgerät (MG) eine Zuordnung eines verbauten oder zu verbauenden Gerätes (G), dessen Identifizierungscode (IDC) eingelesen wurde, zu einem Ort des Gebäudeplanes (GP) und/oder zu anderen verbauten oder zu verbauenden Geräten (G) im Gebäudeplan (GP) erfolgt, wobei die Zuordnung im Server (S) des Gebäudeautomatisierungssystem (GAS) hinterlegt wird und durch einen entsprechenden Eintrag im digitalen Gebäudemodell (GM) erfolgt.
